(19) Europäisches Patentamt
European Patent Office
Office européen des brevets

(11) Veröffentlichungsnummer: **0 311 962**
**A2**

(12) **EUROPÄISCHE PATENTANMELDUNG**

(21) Anmeldenummer: **88116809.0**

(51) Int. Cl.4: **C07F 9/58 , A01N 57/08**

(22) Anmeldetag: **11.10.88**

(30) Priorität: **14.10.87 DE 3734759**

(43) Veröffentlichungstag der Anmeldung:
**19.04.89 Patentblatt 89/16**

(84) Benannte Vertragsstaaten:
**BE CH DE FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Koch, Volker, Dr.**
**Altkönigstrasse 5**
**D-6233 Kelkheim (Taunus)(DE)**
Erfinder: **Kratt, Günter, Dr.**
**Wiesenstrasse 18**
**D-6239 Eppstein/Taunus(DE)**
Erfinder: **Schnatterer, Stefan, Dr.**
**Flurscheideweg 11**
**D-6230 Frankfurt am Main 80(DE)**
Erfinder: **Waltersdorfer, Anna, Dr.**
**Rauenthaler Weg 28**
**D-6000 Frankfurt am Main 71(DE)**
Erfinder: **Knauf, Werner, Dr.**
**Im Kirschgarten 24**
**D-6239 Eppstein/Taunus(DE)**
Erfinder: **Kern, Manfred, Dr.**
**Im Traminer Weg 8**
**D-6501 Lörzweiler(DE)**

(54) **Pyridylphosphate, Verfahren zu ihrer Herstellung, sie enthaltende Mittel und ihre Verwendung als Schädlingsbekämpfungsmittel.**

(57) Verbindungen der Formel I

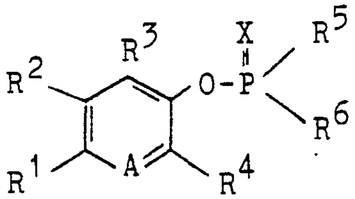

(I),

worin
A = N oder N → O,
$R^1$, $R^2$ = unabhängig voneinander Halogen,
X = O oder S,
$R^3$, $R^4$ = unabhängig voneinander H, Halogen, Phenyl, Phenylthio, Phenoxy, Phenylsulfenyl, Phenylsulfinyl, Phenylsulfonyl, Phenylsulfonylamino, Phenylamino, Phenylcarbonylamino, welche sämtlich durch Halogen, Alkyl, Alkoxy, Alkylcarbonyl, Alkoxycarbonyl, Haloalkoxy, Haloalkyl, Nitro, Dialkylamino, Alkylthio, Cyano oder Carboxyl im Phenylteil substituiert sein können, Alkyl, Alkoxy, Alkylthio, Alkylcarbonyl, Alkoxycarbonyl,

EP 0 311 962 A2

Haloalkoxy, Haloalkyl, Alkylsulfenyl, Alkylsulfinyl, Alkylsulfonyl, Cyano, Nitro, Carboxyl, Sulfo, Heteroaryl, Heteroaryloxy, Alkenyl, Alkinyl, welche beide gegebenenfalls durch Halogen ein- oder mehrfach substituiert sein können, Amino, Monoalkylamino, Dialkylamino, wobei die beiden Alkylgruppen zusammen mit dem N-Atom einen Ring von 5 bis 7 Gliedern bilden können, Alkylsulfonylamino, Thiocyanato, Cyanato und

$R^5$, $R^6$ = unabhängig voneinander Alkyl, Alkoxy, Monoalkylamino, Dialkylamino, wobei die beiden Alkylgruppen zusammen mit dem N-Atom einen Ring von 5-7 Gliedern bilden können, Phenyl, Phenoxy, Phenylthio, welche sämtlich durch Halogen, Alkyl, Alkoxy, Alkylcarbonyl, Alkoxycarbonyl, Haloalkoxy, Haloalkyl, Nitro, Dialkylamino, Alkylthio, Cyano oder Carboxyl substituiert sein können, oder Alkylthio bedeuten, besitzen vorteilhafte insektizide, akarizide oder nematozide Eigenschaften.

# Pyridylphosphate, Verfahren zu ihrer Herstellung, sie enthaltende Mittel und ihre Verwendung als Schädlingsbekämpfungsmittel

Die Verwendung von (Thio)phosphor- und phosphonsäurederivaten als Schädlingsbekämpfungsmittel ist bekannt und in der Literatur beschrieben, so z.B. in US-PS 3,927,004, US-PS 3,244,586 oder DE-OS 23 50 886.

Es wurden neue Pyridylphosphate gefunden, die vorteilhafte Wirkungen gegen Pflanzenschädlinge aufweisen.

Gegenstand der vorliegenden Erfindung sind daher die Verbindungen der allgemeinen Formel I

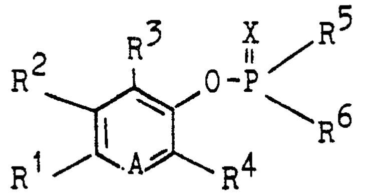

(I),

worin
A = N oder N → O,
$R^1$, $R^2$ = unabhängig voneinander Halogen,
X = O oder S,
$R^3$, $R^4$ = unabhängig voneinander H, Halogen, Phenyl, Phenylthio, Phenoxy, Phenylsulfenyl, Phenylsulfinyl, Phenylsulfonyl, Phenylsulfonylamino, Phenylamino, Phenylcarbonylamino, welche sämtlich durch Halogen, ($C_1$-$C_4$)-Alkyl, ($C_1$-$C_4$)-Alkoxy, ($C_1$-$C_4$)-Alkylcarbonyl, ($C_1$-$C_4$)-Alkoxycarbonyl, ($C_1$-$C_4$)-Haloalkoxy, ($C_1$-$C_4$)-Haloalkyl, Nitro, ($C_1$-$C_4$)-Dialkylamino, ($C_1$-$C_4$)-Alkylthio, Cyano oder Carboxyl im Phenylteil substituiert sein können, ($C_1$-$C_6$)-Alkyl, ($C_1$-$C_6$)-Alkoxy, ($C_1$-$C_6$)-Alkylthio, ($C_1$-$C_6$)-Alkylcarbonyl, ($C_1$-$C_6$)-Alkoxycarbonyl, ( $C_1$-$C_6$)-Haloalkoxy, ($C_1$-$C_6$)-Haloalkyl, ($C_1$-$C_6$)-Alkylsulfenyl, ($C_1$-$C_6$)-Alkylsulfinyl, ($C_1$-$C_6$)-Alkylsulfonyl, Cyano, Nitro, Carboxyl, Sulfo, Heteroaryl, Heteroaryloxy, ($C_2$-$C_6$)-Alkenyl, ($C_2$-$C_6$)-Alkinyl, welche beide gegebenenfalls durch Halogen ein- oder mehrfach substituiert sein können, Amino, ($C_1$-$C_6$)-Monoalkylamino, ($C_1$-$C_6$)-Dialkylamino, wobei die beiden Alkylgruppen zusammen mit dem N-Atom einen Ring von 5 bis 7 Gliedern bilden können, ($C_1$-$C_6$)-Alkylsulfonylamino, Thiocyanato, Cyanato und
$R^5$, $R^6$ = unabhängig voneinander ($C_1$-$C_6$)-Alkyl, ($C_1$-$C_6$)-Alkoxy, ($C_1$-$C_6$)-Monoalkylamino, ($C_1$-$C_6$)-Dialkylamino, wobei die beiden Alkylgruppen zusammen mit dem N-Atom einen Ring von 5-7 Gliedern bilden können, Phenyl, Phenoxy, Phenylthio, welche sämtlich durch Halogen, ($C_1$-$C_4$)-Alkyl, ($C_1$-$C_4$)-Alkoxy, ($C_1$-$C_4$)-Alkylcarbonyl, ($C_1$-$C_4$)-Alkoxycarbonyl, ($C_1$-$C_4$)-Haloalkoxy, ($C_1$-$C_4$)-Haloalkyl, Nitro, ($C_1$-$C_4$)-Dialkylamino, ($C_1$-$C_4$)-Alkylthio, Cyano oder Carboxyl substituiert sein können, oder ($C_1$-$C_6$)-Alkylthio bedeuten.

Dabei bedeutet Heteroaryl Pyridyl, Pyrrolyl, Furyl oder Thienyl bzw. die entsprechenden sauerstoffhaltigen Reste im Fall von Heteroaryloxy und Alkyl jeweils geradkettiges oder verzweigtes Alkyl.

Halogen bedeutet bevorzugt Cl, Br und J.

Bevorzugt sind die Verbindungen der Formel I, worin X = O oder S, A = N, $R^1$ und $R^2$ = unabhängig voneinander Halogen, $R^3$, $R^4$ = unabhängig voneinander H, Halogen, ($C_1$-$C_6$)-Alkyl, ($C_1$-$C_6$)-Alkoxy, ($C_1$-$C_6$)-Alkylthio, ($C_1$-$C_6$)-Monoalkylamino, ($C_1$-$C_6$)-Dialkylamino, Phenyl, Phenoxy oder Phenylthio und $R^5$, $R^6$ unabhängig voneinander ($C_1$-$C_6$)-Alkyl, ($C_1$-$C_6$)-Alkoxy, ($C_1$-$C_6$)-Monoalkylamino, ($C_1$-$C_6$)-Dialkylamino, Phenyl, Phenoxy, Phenylthio oder ($C_1$-$C_6$)-Alkylthio bedeuten.

Besonders bevorzugt sind die Verbindungen der Formel I, worin $R^1$ = Cl, Br oder J, $R^2$ = Cl oder Br, A = N, X = O oder S, $R^3$, $R^4$ = unabhängig voneinander H, Halogen, ($C_1$-$C_6$)-Alkyl, ($C_1$-$C_6$)-Alkoxy oder ($C_1$-$C_6$)-Alkylthio und $R^5$, $R^6$ = unabhängig voneinander ($C_1$-$C_6$)-Alkyl, ($C_1$-$C_6$)-Alkoxy, ($C_1$-$C_6$)-Alkylthio, ($C_1$-$C_6$)-Monoalkylamino oder ($C_1$-$C_6$)-Dialkylamino bedeuten.

Gegenstand der vorliegenden Erfindung ist auch ein Verfahren zur Herstellung der Verbindungen der Formel I, dadurch gekennzeichnet, daß man eine Verbindung der Formel II

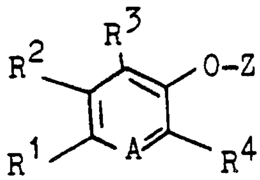

(II),

worin Z = H, Alkalimetall oder Ammonium, welches gegebenenfalls substituiert sein kann, bedeutet und $R^1$ bis $R^4$ und A die Bedeutungen wie in Formel I besitzen, im Falle Z = H in Gegenwart eines säurebindenden Mittels, mit einer Verbindung der Formel III

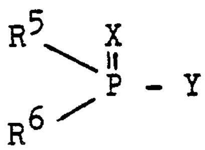

(III),

worin Y = Halogen ist und $R^5$, $R^6$ und X die Bedeutungen wie in Formel I besitzen, umsetzt.

Es werden in der Regel etwa stöchiometrische Mengen der Reaktionspartner eingesetzt; jedoch kann ein Überschuß der Verbindung der Formel III von 5 - 10 % vorteilhaft sein.

Das Verfahren wird zweckmäßigerweise in Gegenwart eines gegenüber den Reaktionsteilnehmern inerten Lösungsmittels durchgeführt. In Betracht kommen vorzugsweise niedere aliphatische Ketone wie Aceton oder Methylethylketon, Alkanole wie Methanol, Ethanol oder Isopropanol, Ester wie Essigsäureethylester, Nitrile wie Acetonitril, N-alkylierte Säureamide wie Dimethylformamid, Ether wie Dioxan, Glykoldimethylether oder Tetrahydrofuran, chlorierte Kohlenwasserstoffe wie Chloroform oder Tetrachlorkohlenstoff und Wasser sowie Gemische solcher Lösungsmittel.

Im Falle Z = Wasserstoff setzt man dem Reaktionsgemisch säurebindende Mittel zu. Als solche kommen bevorzugt Alkalimetallhydroxide und -carbonate zur Anwendung; es können aber auch tertiäre Stickstoffbasen wie Pyridin oder Triethylamin verwendet werden.

Z = Alkalimetall bedeutet bevorzugt $Na^+$ oder $K^+$.

Die Reaktionstemperaturen können innerhalb vo 0 bis 150 °C variiert werden, vorzugsweise arbeitet man zwischen +50 °C und +120 °C.

Die Hydroxypyridine der Formel II (Z = H) lassen sich nach literaturbekannten Methoden herstellen (DE-OS 35 45 570). Ausgehend von diesen Hydroxypyridinen sind die Verbindungen der Formel II mit Z = Alkalimetall oder Ammonium durch allgemein bekannte Verfahrensschritte erhältlich (Beilstein, Handbuch der organ. Chemie, H 21, Bd. 21, S 46). Die Halogenphosphorverbindungen der Formel III sind bekannt und nach üblichen Methoden leicht zugänglich (Houben-Weyl, Methoden der organischen Chemie, Bd. E2).

Die Wirkstoffe eignen sich bei guter Pflanzenverträglichkeit zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychturus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimes lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Naphotettix cincticeps, Lecanium corni, Saissetia oleae, Laodelphax striatellus, Nilaparvata lugens, Aonidiella aurantii, Aspidiotus hederae, Pseudococcus spp., Psylla spp.
Aus der Ordnung der Lepidoptera z.B. Pectinophora gossypiella, Bupalus piniarius, Cheimatobia brumata, Lithocolletis blancardella, Ryponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia koehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana. Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica. Aus der Ordnung der Hymenoptera z.B. Diprion spp., Hoplocampa spp., Lasius spp., Monomorium pharaonis, Vespa spp..
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitato, Dacus oleae, Tipula paludosa.

Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Weiterhin haben die Verbindungen eine ausgezeichnete Wirkung gegen pflanzenschädigende Nematoden, beispielsweise solche der Gattungen Meloidogyne, Heterodera, Ditylenchus, Aphelenchoides, Radopholus, Globodera, Pratylenchus, Longidorus und Xiphinema.

Gegenstand der Erfindung sind auch Mittel, die die Verbindungen der Formel I neben geeigneten Formulierungshilfsmitteln enthalten.

Die erfindungsgemäßen Mittel enthalten die Wirkstoffe der Formel I im allgemeinen zu 1 bis 95 Gew.-%.

Sie können auf verschiedene Art formuliert werden, je nachdem wie es durch die biologischen und/oder chemisch-physikalischen Parameter vorgegeben ist. Als Formulierungsmöglichkeiten kommen daher infrage:
Spritzpulver (WP), emulgierbare Konzentrate (EC), wäßrige Lösungen (SC), Emulsionen, versprühbare Lösungen, Dispersionen auf Öl- oder Wasserbasis (SC), Suspoemulsionen (SC), Stäubemittel (DP), Beizmittel, Granulate in Form von Mikro-, Sprüh-, Aufzugs- und Adsorptionsgranulaten, wasserdispergierbare Granulate (WG), ULV-Formulierungen, Mikrokapseln, Wachse oder Köder.

Diese einzelnen Formulierungstypen sind im Prinzip bekannt und werden beispielsweise beschrieben in:
Winnacker-Küchler, "Chemische Technologie", Band 7, C. Hauser Verlag München, 4. Aufl. 1986; van Falkenberg, "Pesticides Formulations" Marcel Dekker N.Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of

Insecticide Dust Diluents and Carriers", 2nd Ed., Darland Books, Caldwell N.J.; H.v.Olphen, "Introduction to Clay Colloid Chemistry", 2nd Ed., J. Wiley & Sons, N.Y.; Marschen, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grensflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium, 2,2′-dinaphthylmethan-6,6′-disulfonsaures Natrium, dibutylnaphthalin-sulfonsaures Natrium oder auch oleylmethyltaurinsaures Natrium enthalten. Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden:
Alkylarylsulfonsaure Calzium-Salze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitan-Fettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Poryphillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 5 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Daneben enthalten die genannten Wirkstofformulierungen gegebenenfalls die jeweils üblichen Haft-, Netz-, Dispergier-, Emulgier-, Penetrations-, Lösungsmittel, Füll-oder Trägerstoffe.

Zur Anwendung werden die in handelsüblicher Form vorliegenden Konzentrate gegebenenfalls in üblicher Weise verdünnt, z.B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

Mit den äußeren Bedingungen wie Temperatur, Feuchtigkeit u.a. variiert die erforderliche Aufwandmenge. Sie kann innerhalb weiter Grenzen schwanken, z.B. zwischen 0,005 und 10,0 kg/ha oder mehr Aktivsubstanz, vorzugsweise liegt sie jedoch zwischen 0,01 und 5 kg/ha.

Die erfindungsgemäßen Wirkstoffe, insbesondere die der aufgeführten Beispiele, können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, Formamidine, Zinnverbindungen, durch Mikroorganismen hergestellte Stoffe u.a.. Bevorzugte Mischungspartner sind:

1. aus der Gruppe der Phosphcrsäureester

Azinphos-ethyl, Azinphos-methyl, 1-(4-Chlorphenyl)-4-(O-ethyl, S-propyl)phosphoryloxypyrazol (TIA-230), Chlorpyrifos, Coumaphos, Demeton, Demeton-S-methyl, Diazinon, Dichlorvos, Dimethoat, Ethoprophos, Etrimfos, Fenitrothion, Fenthion, Heptenophos, Parathion, Parathion-methyl, Phosalon, Pirimiphos-ethyl, Pirimiphos-methyl, Profenofos, Prothiofos, Sulprofos, Triazophos, Trichlorphon.

2. aus der Gruppe der Carbamate

Aldicarb, Bendiocarb, BPMC (2-(1-Methylpropyl)phenylmethylcarbamat), Butocarboxim, Butoxicarboxim, Carbaryl, Carbofuran, Carbosulfan, Cloethocarb, Isoprocarb, Methomyl, Oxamyl, Pirmicarb, Promecarb, Propoxur, Thiodicarb.

3. aus der Gruppe der Carbonsäureester

Allethrin, Alphamethrin, Bioallethrin, Bioresmethrin, Cycloprothrin, Cyfluthrin, Cyhalothrin, Cypermethrin, Deltamethrin, 2,2-Dimethyl-3-(2-chlor-2-trifluormethylvinyl)cyclopropancarbonsäure-(alpha-cyano-3-phenyl-2-methyl-benzyl)ester (FMC 54800), Fenpropathrin, Fenfluthrin, Fenvalerat, Flucythrinate, Flumethrin, Fluvalinate, Permethrin, Resmethrin, Tralomethrin.

4. aus der Gruppe der Formamidine

Amitraz, Chlordimeform

5. aus der Gruppe der Zinnverbindungen

Azocyclotin, Cyhexatin, Fenbutatinoxid

6. Sonstige

Abametin, Bacillus thuringiensis, Bensultap, Binapacryl, Bromopropylate, Buprofecin, Camphechlor, Cartap, Chlorbenzialate, Chlorfluazuron, 2-(4-Chlorphenyl)-4,5-diphenylthiophen (UBI-T 930), Chlofentezine, Cyclopropancarbonsäure(2-naphthylmethyl)ester (Ro 12-0470), Cyromacin, DDT, Dicofol, N-(3,5-Dichlor-4-(1,1,2,2-tetrafluoroethoxy)phenylamino)carbonyl)-2,6-difluorbenzamide (XRD 473), Diflubenzuron, N-(2,3-Dihydro-3-methyl-1,3-thiazol-2-ylidene)2,4-xylidine, Dinobuton, Dinocap, Endosulfan, Fenoxycarb, Fenthiocarb, Flubenzimine, Flufenoxuron, Gamma-HCH, Hexythiazox, Hydramethylnon (AC 217 300) Ivermectin, 2-Nitromethyl-4,5-dihydro-6H-thiazin (SD 52618), 2-Nitromethyl-3,4-dihydrothiazol (SD 35651), 2-Nitromethylene-1,3-thiazinan-3-yl-carbamaldehyde (WL 108 477), Propargite, Teflubenzuron, Tetradifon, Tetrasul, Thiocyclam, Triflumaron, Kernpolyeder- und Granuloseviren.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0001 bis zu 100 Gew.-% Wirkstoff, vorzugsweise zwischen 0,001 und 1 Gew.-% liegen. Die Anwendung geschieht in einer den Anwendungsformen angepaßten üblichen Weise.

Die erfindungsgemäßen Wirkstoffe eignen sich auch zur Bekämpfung von Ekto- und Endoparasiten vorzugsweise von ektoparasitierenden Insekten auf dem veterinärmedizinischen Gebiet bzw. auf dem Gebiet der Tierhaltung.

Die Anwendung der erfindungsgemäßen Wirkstoffe geschieht hier in bekannter Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgießens (pour-on and spot-on) und des Einpuderns.

Die jeweils geeigneten Dosierungen und Formulierungen sind insbesondere von der Art und dem Entwicklungsstadium der Nutztiere und auch vom Befallsdruck der Insekten abhängig und lassen sich nach den üblichen Methoden leicht ermitteln und festlegen. Die neuen Verbindungen können bei Rindern z.B. in Dosiermengen von 0,1 bis 100 mg/kg Körpergewicht eingesetzt werden.

Nachfolgende Beispiele dienen zur Erläuterung der Erfindung.

**A. Formulierungsbeispiele**

a) Ein Stäubemittel wird erhalten, indem man 10 Gew.-Teile Wirkstoff und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile Wirkstoff, 65 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat stellt man her, indem man 40 Gew.-Teile Wirkstoff mit 7 Gew.-Teilen eines Sulfobernsteinsäurehalbesters, 2 Gew.-Teilen eines Ligninsulfonsäure-Natriumsalzes und 51 Gew.-Teilen Wasser mischt und in einer Reibkugelmühle auf eine Feinheit von unter 5 Mikron vermahlt.

d) Ein emulgierbares Konzentrat läßt sich herstellen aus 15 Gew.-Teilen Wirkstoff, 75 Gew.-Teilen Cyclohexanon als Lösungsmittel und 10 Gew.-Teilen oxethyliertem Nonylphenol (10 AeO) als Emulgator.

e) Ein Granulat läßt sich herstellen aus 2 bis 15 Gew.-Teilen Wirkstoff und einem inerten Granulatträgermaterial wie Attapulgit, Bimsgranulat und/oder Quarzsand. Zweckmäßigerweise verwendet man eine Suspension des Spritzpulvers aus Beispiel b) mit einem Feststoffanteil von 30 % und spritzt diese auf die Oberfläche eines Attapulgitgranulats, trocknet und vermischt innig. Dabei beträgt der Gewichtsanteil des Spritzpulvers ca. 5 % und der des inerten Trägermaterials ca. 95 % des fertigen Granulats.

**B. Herstellungsbeispiele**

3.0 g (18.2 mM) 2,3-Dichlor-5-hydroxypyridin, 3.0 g (21.8 mM) Kaliumcarbonat und 3.4 g (18.2 mM) 0,0-Diethyl-thiophosphorylchlorid in 30 ml Acetonitril wurden 3 Stunden bei 70° C gerührt. Anschließend wurde auf 50 ml Wasser gegossen, mit Methylenchlorid extrahiert und die organischen Phasen gründlich mit Wasser extrahiert. Die organische Phase wurde über Magnesiumsulfat getrocknet. Nach dem Einengen in Wasserstrahlvakuum wurden 4.5 g von 0,0-Diethyl-O-(5-(2,3-dichlorpyridyl)-thiophosphat (78 % d.Th.) isoliert.

Nach diesem Verfahren wurden die in der folgenden Tabelle aufgeführten Verbindungen der Formel I hergestellt.

Tabelle 1

| Bsp. Nr. | $R^1$ | $R^2$ | $R^3$ | $R^4$ | $R^5$ | $R^6$ | X | $n_D$ bzw. Fp (°C) |
|---|---|---|---|---|---|---|---|---|
| 1 | Cl | Cl | H | H | $OC_2H_5$ | $OC_2H_5$ | O | $n_D^{24}$ : 1.5005 |
| 2 | Cl | Cl | H | H | $OCH_3$ | $OCH_3$ | S | $n_D^{25}$ : 1.5463 |
| 3 | Cl | Cl | H | H | $OC_2H_5$ | $OC_2H_5$ | S | Öl |
| 4 | Cl | Cl | H | H | $OC_3H_7$ | $OC_3H_7$ | S | $n_D^{30}$ : 1.5203 |
| 5 | Cl | Cl | H | H | $OC_2H_5$ | $NHC_3H_7(i)$ | S | $n_D^{24}$ : 1.5398 |
| 6 | Cl | Cl | H | H | $OC_2H_5$ | $CH_3$ | S | $n_D^{30}$ : 1.5512 |
| 7 | Cl | Cl | H | H | $OC_2H_5$ | $SC_3H_7(n)$ | S | $n_D^{22}$ : 1.5650 |
| 8 | Cl | Cl | H | H | $OC_2H_5$ | $SCH(CH_3)C_2H_5$ | S | $n_D^{25,5}$ : 1.5645 |
| 9 | Cl | Cl | H | H | $N(CH_3)_2$ | $N(CH_3)_2$ | S | 45 - 47 |
| 10 | Cl | Br | H | H | $OC_2H_5$ | $OC_2H_5$ | S | $n_D^{22}$ : 1.5421 |
| 11 | Cl | Br | H | H | $OC_2H_5$ | $OC_2H_5$ | O | $n_D^{21}$ : 1.5137 |
| 12 | Br | Cl | H | H | $OC_2H_5$ | $OC_2H_5$ | S | $n_D^{22}$ : 1.5486 |

**Tabelle 1 (Fortsetzung)**

| Bsp. Nr. | $R^1$ | $R^2$ | $R^3$ | $R^4$ | $R^5$ | $R^6$ | X | $n_D$ bzw. Fp (°C) |
|---|---|---|---|---|---|---|---|---|
| 13 | Br | Cl | H | H | $OC_2H_5$ | $OC_2H_5$ | O | $n_D^{22}$ : 1.5202 |
| 14 | J | Cl | H | H | $OC_2H_5$ | $OC_2H_5$ | S | Öl |
| 15 | Cl | Cl | H | Cl | $OC_2H_5$ | $OC_2H_5$ | S | $n_D^{24,5}$ : 1.5450 |
| 16 | Br | Cl | H | Br | $OC_2H_5$ | $OC_2H_5$ | S | $n_D^{22}$ : 1.5758 |
| 17 | Br | Cl | H | Br | $OC_2H_5$ | $OC_2H_5$ | O | $n_D^{22}$ : 1.5482 |
| 18 | J | Cl | H | J | $OC_2H_5$ | $OC_2H_5$ | S | $n_D^{24}$ : 1.6341 |
| 19 | Br | Cl | Br | Br | $OC_2H_5$ | $OC_2H_5$ | S | $n_D^{25}$ : 1.5923 |
| 20 | Br | Cl | Br | Br | $OC_2H_5$ | $OC_2H_5$ | O | $n_D^{25}$ : 1.5476 |
| 21 | Br | Cl | Br | Br | $OC_2H_5$ | $SC_3H_7(n)$ | O | Öl |

## C. Biologische Beispiele

**Beispiel 1**

Auf die Innenseite des Deckels und des Bodens einer Petrischale werden jeweils 1 ml der zu testenden Formulierung emulgiert in Wasser gleichmäßig aufgetragen und nach dem Antrocknen des Belages jeweils 10 Imagines der Hausfliege (Musca domestica) eingegeben. Nach dem Verschließen der Schale werden diese bei Raumtemperatur aufbewahrt und nach 3 Stunden die Mortalität der Versuchstiere bestimmt. Bei 250 ppm (bezogen auf den Gehalt an Wirkstoff) zeigten die Präparate 1, 2, 3, 4, 5, 6, 7, 10, 11, 12, 13, 15, 16, 17,19, 20, 21 eine gute Wirkung (100 % Mortalität) gegenüber der Stubenfliege.

**Beispiel 2**

In die wie in Beispiel 1 behandelte Petrischale werden je 10 Larven (L4) der Deutschen Schabe (Blattella germanica) gesetzt, die Schalen verschlossen und nach 5 Tagen die Mortalität der Versuchstiere bestimmt.
Bei 100 ppm (bezogen auf den Gehalt an Wirkstoff) zeigten die Präparate 1, 2, 3, 4, 5, 7, 10, 11, 12, 13, 15, 16 und 17 eine gute Wirkung (100 % Mortalität) gegenüber der Deutschen Schabe.

**Beispiel 3**

Auf die Innenseite des Bodens einer Petrischale wurden 1 Lage Filterpapier und darauf eine 3 - 5 ml große Menge halbsynthetische Futterdiät aufgebracht. Nach dem Erkalten wird die zu testende Formulierung mit Wasser auf die Oberfläche des Futters und des Filterpapiers in fallenden Konzentrationen gesprüht und nach dem Antrocknen des Spritzbelages je 10 Larven (L3 - L4) des gemeinen Baumwollwurms (Prodenia litura) eingesetzt.
Die mit Deckel verschlossenen Petrischalen werden 7 Tage bei Raumtemperatur aufbewahrt und danach die Mortalität der Versuchstiere ermittelt.

Bei 1000 ppm (bezogen auf den Gehalt an Wirkstoff) zeigten die Präparate 1, 2, 3, 5, 6, 7, 10, 11, 12, 13, 15 und 17 eine gute Wirkung gegen Larven des gemeinen Baumwollwurms.

**Beispiel 4**

Larven des mexikanischen Bohnenkäfers (Epilachna varivestis, L III) wurden in einer Spritzapparatur mit einer Wirkstoffzubereitung der gewünschten Konzentration behandelt. Gleichzeitig wurden Buschbohnenblätter (Phaseolus vulgaris) in die entsprechende Wirkstofflösung getaucht. Nach dem Antrocknen des Spritzbelages wurden die Larven des Käfers auf die Bohnenblätter gesetzt. Nach 3 Tagen wurde die Abtötung der Larven in % bestimmt. Bei 250 ppm (bezogen auf Wirkstoff) zeigten die Präparate 1, 2, 3, 4, 5, 6, 7, 9, 10, 11, 12, 13, 15, 16, 17 und 18 eine gute Wirkung gegenüber mexikanischem Bohnenkäfer.

**Beispiel 5**

Larven des letzteren Larvenstadiums der Reiszikade (Nilaparvata lugens) werden in Petrischalen gesetzt, deren Boden mit einem behandelten saugfähigen Papier ausgelegt sind. Vor dem Einsetzen der Tiere wird jedes Filterpapier mit 2 ml dest. Wasser angefeuchtet und anschließend mit fallenden Dosierungen des Versuchspräparates emulgiert in Wasser entsprechend 600 l Wasser/ha besprüht. Nach dem Besetzen der Schalen werden diese sofort verschlossen und bis zur Auswertung 24 h unter Laborbedingungen aufbewahrt. Danach wird die Wirkung (% Mortalität) ausgewertet. Die Präparate 1, 3, 5, 6, 10, 11, 12, 13, 16 und 17 zeigten bei einer Wirkstoffkonzentration in der Spritzbrühe von 100 ppm, 100 % Wirkung gegenüber Reiszikaden.

**Beispiel 6** .

Mit Bohnenspinnmilben (Tetranychus urticae, Vollpopulation) stark befallene Bohnenpflanzen (Phaseolus v.) wurden mit der wäßrigen Verdünnung eines Emulsionskonzentrates, das 250 ppm des jeweiligen

Wirkstoffes enthielt, gespritzt. Die Mortalität der Milben wurde nach 7 Tagen kontrolliert. 100 % Abtötung wurde mit den Verbindungen gemäß Beispiel 2, 3, 4, 5, 6, 7, 10, 11, 12, 13, 15, 16 und 17 erzielt.

**Beispiel 7**

Mit Obstbaumspinnmilben (Panonychus ulmi, Vollpopulation) stark befallene Apfelbäumchen wurden mit der wäßrigen Verdünnung eines Emulsionskonzentrates, das 250 ppm des jeweiligen Wirkstoffes enthielt, gespritzt.
Die Mortalität der Milben wurde nach 7 Tagen kontrolliert. 100 % Abtötung wurde mit den Verbindungen gemäß Beispiel 3, 5, 10, 12 und 13 erzielt.

**Beispiel 8**

Mit Kundebohnenblattlaus (Aphis craccivora) stark besetzte Ackerbohnen (Vicia faba) wurden mit wäßrigen Verdünnungen von Spritzpulverkonzentraten mit 250 ppm Wirkstoffgehalt bis zum Stadium des beginnenden Abtropfens besprüht.
Die Mortalität der Blattläuse wurde nach 3 Tagen bestimmt. Eine 100 %ige Abtötung konnte mit den Verbindungen gemäß Beispiel 1, 2, 3, 4, 5, 6, 7, 9, 10, 11, 12, 13, 15, 16, 17, 18 und 20 erzielt werden.

**Beispiel 9**

Mit Citrus-Schmierlaus (Pseudococcus citri) stark befallene Bohnenpflanzen (Phaseolus vulgaris) wurden mit wäßrigen Suspensionen von Spritzpulverkonzentraten (jeweils 250 ppm Wirkstoff in der Spritzbrühe) bis zum Stadium beginnenden Abtropfens besprüht. Nach einer Standzeit von 7 Tagen im Gewächshaus bei 20 - 25° C erfolgte die Kontrolle. 100 % Mortalität wurde für die Verbindungen gemäß Beispiel 1, 2, 3, 4, 5, 6, 7, 9, 10, 11, 12, 13, 15, 16, 17 und 20 festgestellt.

**Beispiel 10**

Eine staubförmige Formulierung wurde mit Erde gemischt, die mit Meloidogyne incognita versucht war. Anschließend erfolgte das Abfüllen in Töpfe und die Bepflanzung dieser mit Tomaten. Nach einer Standzeit von 4 Wochen im Gewächshaus wurden die Wertzahlen nach folgendem Schema ermittelt:

Tabelle 2

| Gallen / Pflanze | Wertzahl |
|---|---|
| 0 | 1 |
| 1 - 2 | 2 |
| 3 - 5 | 3 |
| 6 - 10 | 4 |
| . | . |
| . | . |
| über 150 | 9 |

Beim Einsatz von 15 ppm wurde für die Verbindungen gemäß Beispiel 3, 5, 10 und 12 Wertzahl 1 erreicht.

**Beispiel 11**

Larven der Totenkopfschabe (Blaberus craniifer, L 4) wurden topikal mit in Methanol gelöstem Wirkstoff behandelt. Nach 7 Tagen wurde die Abtötung der Larven in % bestimmt.

Bei Aufwandmengen von 2 x $10^{-4}$ g a.i. zeigten die Präparate 3, 5, 10 und 13 eine gute Wirkung (100 % Mortalität).

**Beispiel 12**

Larven des Tabakschwärmers (Manduca sexta, L 4) wurden topikal mit in Aceton gelöstem Wirkstoff behandelt. Nach 7 Tagen wurde die Abtötung der Larven in % bestimmt.
Bei Aufwandmengen von 2 x $10^{-4}$ g a.i. zeigten die Präparate 3, 5, 10 und 13 eine gute Wirkung (100 % Mortalität).

**Ansprüche**

1. Verbindungen der Formel I

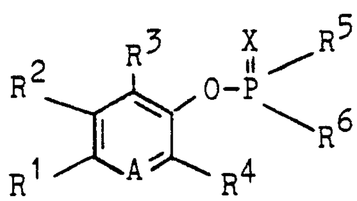

(I),

worin
A = N oder N → O,
$R^1$, $R^2$ = unabhängig voneinander Halogen,
X = O oder S,
$R^3$, $R^4$ = unabhängig voneinander H, Halogen, Phenyl, Phenylthio, Phenoxy, Phenylsulfenyl, Phenylsulfinyl, Phenylsulfonyl, Phenylsulfonylamino, Phenylamino, Phenylcarbonylamino, welche sämtlich durch Halogen, ($C_1$-$C_4$)-Alkyl, ($C_1$-$C_4$)-Alkoxy, ($C_1$-$C_4$)-Alkylcarbonyl, ($C_1$-$C_4$)-Alkoxycarbonyl, ($C_1$-$C_4$)-Haloalkoxy, ($C_1$-$C_4$)-Haloalkyl, Nitro, ($C_1$-$C_4$)-Dialkylamino, ($C_1$-$C_4$)-Alkylthio, Cyano oder Carboxyl im Phenylteil substituiert sein können, ($C_1$-$C_6$)-Alkyl, ($C_1$-$C_6$)-Alkoxy, ($C_1$-$C_6$)-Alkylthio, ($C_1$-$C_6$)-Alkylcarbonyl, ($C_1$-$C_6$)-Alkoxycarbonyl, ( $C_1$-$C_6$)-Haloalkoxy, ($C_1$-$C_6$)-Haloalkyl, ($C_1$-$C_6$)-Alkylsulfenyl, ($C_1$-$C_6$)-Alkylsulfinyl, ($C_1$-$C_6$)-Alkylsulfonyl, Cyano, Nitro, Carboxyl, Sulfo, Heteroaryl, Heteroaryloxy, ($C_2$-$C_6$)-Alkenyl, ($C_2$-$C_6$)-Alkinyl, welche beide gegebenenfalls durch Halogen ein- oder mehrfach substituiert sein können, Amino, ($C_1$-$C_6$)-Monoalkylamino, ($C_1$-$C_6$)-Dialkylamino, wobei die beiden Alkylgruppen zusammen mit dem N-Atom einen Ring von 5 bis 7 Gliedern bilden können, Alkylsulfonylamino, Thiocyanato, Cyanato und
$R^5$, $R^6$ = unabhängig voneinander ($C_1$-$C_6$)-Alkyl, ($C_1$-$C_6$)-Alkoxy, ($C_1$-$C_6$)-Monoalkylamino, ($C_1$-$C_6$)-Dialkylamino, wobei die beiden Alkylgruppen zusammen mit dem N-Atom einen Ring von 5-7 Gliedern bilden können, Phenyl, Phenoxy, Phenylthio, welche sämtlich durch Halogen, ($C_1$-$C_4$)-Alkyl, ($C_1$-$C_4$)-Alkoxy, ($C_1$-$C_4$)-Alkylcarbonyl, ($C_1$-$C_4$)-Alkoxycarbonyl, ($C_1$-$C_4$)-Haloalkoxy, ($C_1$-$C_4$)-Haloalkyl, Nitro, ($C_1$-$C_4$)-Dialkylamino, ($C_1$-$C_4$)-Alkylthio, Cyano oder Carboxyl substituiert sein können, oder ($C_1$-$C_6$)-Alkylthio bedeuten.

2. Verbindungen der Formel I von Anspruch 1, worin X = O oder S, A = N, $R^1$ und $R^2$ = unabhängig voneinander Halogen, $R^3$, $R^4$ = unabhängig voneinander H, Halogen, ($C_1$-$C_6$)-Alkyl, ($C_1$-$C_6$)-Alkoxy, ($C_1$-$C_6$)-Alkylthio, ($C_1$-$C_6$)-Monoalkylamino, ($C_1$-$C_6$)-Dialkylamino, Phenyl, Phenoxy oder Phenylthio und $R^5$, $R^6$ unabhängig voneinander ($C_1$-$C_6$)-Alkyl, ($C_1$-$C_6$)-Alkoxy, ($C_1$-$C_6$)-Monoalkylamino, ($C_1$-$C_6$)-Dialkylamino, Phenyl, Phenoxy, Phenylthio oder ($C_1$-$C_6$)-Alkylthio bedeuten.

3. Verbindungen der Formel I von Anspruch 1, worin $R^1$ = Cl, Br oder J, $R^2$ = Cl oder Br, A = N, X = O oder S, $R^3$, $R^4$ = unabhängig voneinander H, Halogen, ($C_1$-$C_6$)-Alkyl, ($C_1$-$C_6$)-Alkoxy oder ($C_1$-$C_6$)-Alkylthio und $R^5$, $R^6$ = unabhängig voneinander ($C_1$-$C_6$)-Alkyl, ($C_1$-$C_6$)Alkoxy, ($C_1$-$C_6$)-Alkylthio, ($C_1$-$C_6$)-Monoalkylamino oder ($C_1$-$C_6$)-Dialkylamino bedeuten.

4. Verfahren zur Herstellung von Verbindungen der Formel I von Ansprüchen 1 bis 3, dadurch gekennzeichnet, daß man eine Verbindung der Formel II

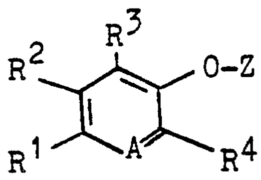

(II),

worin Z = H, Alkalimetall oder Ammonium, welches gegebenenfalls substituiert sein kann, bedeutet und $R^1$ bis $R^4$ und A die Bedeutungen wie in Formel I besitzen, im Falle Z = H in Gegenwart eines säurebindenden Mittels, mit einer Verbindung der Formel III

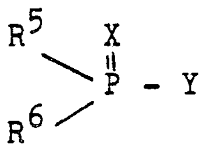

(III),

worin Y = Halogen ist und $R^5$, $R^6$ und X die Bedeutungen wie in Formel I besitzen, umsetzt.

5. Insektizide, akarizide oder nematozide Mittel, dadurch gekennzeichnet, daß sie eine wirksame Menge einer Verbindung der Formel I enthalten.

6. Verwendung der Verbindungen der Formel I zur Bekämpfung von Schadinsekten, Akariden oder Nematoden.

7. Verfahren zur Bekämpfung von Schadinsekten, Akariden oder Nematoden, dadurch gekennzeichnet, daß man auf diese oder die von ihnen befallenen Pflanzen, Flächen oder Substrate eine wirksame Menge einer Verbindung der Formel I appliziert.